(19) **Europäisches Patentamt / European Patent Office / Office européen des brevets**

(11) **EP 2 276 353 B1**

(12) **EUROPEAN PATENT SPECIFICATION**

(45) Date of publication and mention
of the grant of the patent:
**07.09.2011 Bulletin 2011/36**

(51) Int Cl.:
*A23K 1/18* (2006.01)          *A23K 1/165* (2006.01)

(21) Application number: **09704982.9**

(86) International application number:
**PCT/EP2009/050959**

(22) Date of filing: **28.01.2009**

(87) International publication number:
**WO 2009/095417 (06.08.2009 Gazette 2009/32)**

(54) **METHOD FOR ENHANCING PET FOOD PALATABILITY**

VERFAHREN FÜR DIE VERBESSERUNG DER SCHMACKHAFTIGKEIT VON HOBBYTIERFUTTER

PROCÉDÉ PERMETTANT D'AMÉLIORER L'APPÉTIBILITÉ DES ALIMENTS POUR ANIMAUX DE COMPAGNIE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.01.2008 US 24097**

(43) Date of publication of application:
**26.01.2011 Bulletin 2011/04**

(73) Proprietor: **Specialites Pet Food
75008 Paris (FR)**

(72) Inventor: **GELINEAU, Nathalie
F-56230 Questembert (FR)**

(74) Representative: **Ahner, Francis et al
Cabinet Regimbeau
20, rue de Chazelles
75847 Paris Cedex 17 (FR)**

(56) References cited:
**US-A- 3 968 255     US-A- 4 713 250
US-A- 4 804 549**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

**BACKGROUND OF THE INVENTION**

The present invention relates to a method for improving the palatability of compositions (including foods, supplements, treats, toys, and the like) for companion animals. In particular, the invention relates to a method for preparing a palatability enhancer for use in pet foods of low, medium or high moisture.

The invention is in the field of foods for companion animals, such as dogs and cats. All references herein to food of any sort are intended to refer only to food that is manufactured and sold for companion animals, such as dogs and cats. Although testing to date has been focused on dogs and cats, the invention can also be adapted for use with ferrets, and other classes of companion animals.

If desired, the invention disclosed herein can also be tested to evaluate its suitability for use with different classes of animals, including rodents (like hamsters, guinea pigs, rabbits, and the like), birds, as well as horses and any types of livestock. However, since dogs and cats show higher degrees of sensitivity to flavour, taste, and aroma, than rodents, horses, livestock, etc., and since mainly dogs and cats receive flavour enhanced foods, the present text will use the terms of "pets" to refer to all animals that are likely to receive flavour enhanced foods as disclosed herein, and of "pet food" to refer to all types of foods offered to those animals.

It should be understood that the expression "pet food" as used herein includes foods having low, medium or high moisture content. There are three categories of pet foods : (1) dry or low moisture content products (typically less than 15%), which have typically high nutritional content, least expensive packaging, greatest convenience, but are less palatable ; (2) canned or wet or high moisture content products (greater than about 50%), which are typically the most palatable to the pets ; (3) semi-moist or semi-dry or soft dry or intermediate or medium moisture content products (generally between 15 and 50%), that are commonly less palatable than canned foods but more palatable than dry foods.

Pets are well taken care of by their owners which provide them a proper selection of foods. Those foods can be and include their usual diet, supplements, treats, and toys. Pets, like humans, are attracted to and eat more regularly and easily foods which they find palatable. Therefore, palatability enhancers are extremely important for animal consumption. Animal foods such as pet foods typically contain flavour compositions to increase the palatability thereof, and to make them appealing to pets. A large number of flavour compositions (or palatability enhancers or appetizing factors) have been described so far. As an example, in U.S. Patents Nos. 3 857 968 and 3 968 255, Haas and Lugay disclose a palatability improving composition for use in dry animal foods, especially in dry dog foods, comprising fat and proteins, which is obtained by a method including emulsifying the fat, treating the composition with an enzyme mixture comprising lipase and protease and, optionally, inactivating the enzymes. Another example is described in U.S. Patent No. 4 713 250, wherein a composition enhancing palatability of dog foods is obtained through a staged-enzyme reaction comprising first, contacting an aqueous proteinaceous or farinaceous material with protease and/or amylase, then preparing an emulsion comprising fat and the product obtained in the first step, and reacting said emulsion with lipase and protease. A further example is described in U.S. Patent No. 4 089 978, wherein Lugay et al. provide a palatable composition for use in animal food, which is prepared by a method comprising reacting at moderate temperature an aqueous mixture of reducing sugar, animal blood, yeast, and fat with an enzyme mixture containing lipase and protease, then increasing the temperature to more fully develop the flavour and inactivate the enzymes.

However, palatability of such compositions is generally different from one animal species to another, for example, a flavorant effective with cats is often not effective with dogs. Moreover, a flavorant effective in dry pet foods is usually not effective when used in semi-moist or wet pet foods. Therefore, there is a continuing need for new palatability enhancers, which provide a robust flavour and which are easily and effectively usable for companion animals including dogs and cats, in types of foods so different as dry, intermediate and wet foods.

**SUMMARY OF THE INVENTION**

It is therefore an object of the present invention to provide such a "generally applicable" palatability enhancer, i.e., a palatability enhancer which is effective regardless the animal species and the type of food. The method of this invention provides an enhancement of great value in the palatability of pet foods, of low, medium or high moisture contents.

A method for producing a palatability enhancer for a companion animal food is thus presented. This method includes a staged enzyme hydrolysis followed by a flavour-generating thermal reaction of raw materials (for instance poultry, pork, beef, lamb, fish based and the like) to give a highly effective palatability enhancer. Addition or incorporation of the palatability enhancer to pet foods may be done as a liquid product via a coating spraying process, as a dry powder via a coating dusting process, or as a liquid or dry product via mixing it with the pet food ingredients before extrusion or canning. Alternatively, the palatability enhancer may be mixed to the fat and applied concurrently.

The present invention also concerns combining two or more palatability enhancers including at least one as disclosed herein, in order to obtain compositions or mixtures that are useful for increasing palatability in pet foods. The different types of palatability enhancers may be mixed together before their incorporation to the foods (the palatability enhancer mixtures may thus be stored before being used). Alternatively, the various enhancers may be combined *in situ*, which means in the pet foods.

Surprisingly, the palatability enhancer of the invention is of the first ones to be highly attractive to companion animals, preferably dogs and cats, when added to a pet food having either low, medium or high moisture content.

## BRIEF DESCRIPTION OF THE DRAWINGS

Figure 1 is a graph showing palatability results of Super Premium palatability enhancer SP1 vs SP2 (example 1).

Figure 2 is a set of graphs showing palatability results of Super Premium palatability enhancers XLHM vs SP1 and SP2 (examples 1 and 2).

Figure 3 is a graph showing palatability results of Super Premium palatability enhancer PRODUCT B vs PRODUCT C (example 5).

## DETAILED DESCRIPTION OF THE INVENTION

The term "palatability" means a relative preference of an animal for one food composition over another. Palatability may be determined by a standard testing protocol in which the animal has equal access to both compositions. Such preference can arise from any of the animal's senses, but typically is related to taste, aroma, flavour, texture, mouthfeel. A pet food stated herein to have "enhanced palatability" is one for which an animal exhibits preference relative to a control composition.

The terms "palatability enhancers" or "palatants" or "flavours" or "palatability agents" or "appetizing factors" mean any material that enhances the palatability of a food composition to an animal. A palatability enhancer may be a single material or a blend of materials, and it may be natural, processed or unprocessed, synthetic, or part of natural and part of synthetic materials.

The term "kibble" used herein refers to particulate chunks or pieces formed by either a pelleting or extrusion process. Typically, kibbles are produced to give dry and semi-moist pet food. The pieces can vary in sizes and shapes, depending on the process or the equipment. The term "loaf" used herein refers to edible foodstuffs obtained as moist products, and includes terrines, pâtés, mousses, and the like. More generally, the terms "pet foods" encompass all forms of foods including the kibbles and loaves as defined above, that are appropriate for pet consumption.

As it is well known in the art, a "protease" is an enzyme that conducts proteolysis, that is, begins protein catabolism by hydrolysis of the peptide bonds that link amino acids together in the polypeptide chain. A lipase is a water-soluble enzyme that catalyzes the hydrolysis of ester bonds in water-insoluble, lipid substrates. Importantly, since lipases are proteins, they may be at least partially hydrolysed by proteases, when lipases and proteases are used as an enzyme mixture as disclosed in the prior art. This is an adverse reaction that the present invention aims at avoiding.

The terms "fat" and "oil" are , as used herein, synonymous and encompass also mixtures of fats or oils. Animal fats as well as vegetable oils and/or marine oils, can be used. Any commercially available source of animal, vegetable, marine fat can be tested. Plant oils which are available in large quantities are typically canola oil, soybean oil, corn oil, olive oil, sunflower oil, linseed oil, palm oil, safflower oil, and the like, and by-products thereof. Typical animal fats are tallow, lard, poultry fat, and the like, and by-products thereof. Marine oils are typically tuna oil, sardine oil, salmon oil, anchovy oil, fish oil, and the like, and by-products thereof. Also are encompassed herein the fats that are derived from animal, plant, marine sources, or that are produced by animals and plants.

A "thermal reaction" is, according to the present invention, a reaction obtained by combining at an elevated temperature, at least one carbohydrate, preferably a reducing sugar, and at least one nitrogen compound. Such a reaction may actually include various concomitant and/or successive reactions, including, e.g., Maillard reaction. It is possible that a complex array of reactions takes place, depending upon the conditions used. Preferably, the "reducing sugar" is chosen from hexoses, pentoses, glucose, fructose, xylose, ribose, arabinose, starch hydrolysates, and the like, and combinations thereof. As used herein, the terms "nitrogen compound" encompass the twenty known natural amino acids, as well as aminoacid sequences, i.e., peptides, oligopeptides, and proteins or polypeptides. Also are included all compounds containing nitrogen from any sources that are acceptable for use in pet foods. Appropriate nitrogen compounds are chosen from thiamine, methionine, cystine, cysteine, glutathione, hydrolysed vegetable proteins (HVP), yeast autolysates, yeast extracts, and combinations thereof. Are also of course encompassed by the terms "nitrogen compound", any nitrogen compounds containing sulphur that are acceptable for use in pet foods, such as sulphur-containing amino acids.

A first aspect of the present invention concerns a method for preparing a palatability enhancer for use in pet foods, comprising at least:

a) providing a first stage reaction product obtained by:

(i) reacting with at least one exogenous and/or endogenous protease, in the absence of any added (or exogenous) lipase, a substrate comprising proteinaceous and fatty materials, in amounts, under conditions of pH and temperature, and for a time, effective to cause proteolytic reaction,

(ii) heat-inactivating said protease and filtrating the resulting digest product;

b) optionally adding fat;

c) emulsifying said first stage reaction product;

d) reacting said emulsion with at least one lipase, in the absence of any added protease, in amounts, under conditions of pH and temperature, and for a time, effective to cause lipolytic reaction, so as to obtain a second stage reaction product;

e) adding at least one reducing sugar and at least one nitrogen compound to said second stage reaction product and heating the resulting mixture to a temperature and for a time effective to further develop the palatability of the mixture, resulting in the production of a palatability enhancer.

It is preferred to further perform a step of cooling down of the mixture obtained in step e).

Also, after step a)(ii) wherein the protease(s) is(are) heat-inactivated, it is appropriate to cool down the resulting product, e.g., to a temperature of about 20 to about 50°C (preferably of about 25 to about 45°C), in order to be under conditions of temperature effective to cause the subsequent lipolytic reaction as provided in step d). For example, this cooling down will advantageously performed directly after step a)(ii) and the temperature will then be maintained all along steps b), c), and d).

Desirably, the first stage reaction product is prepared and stored under appropriate conditions before subsequent use. Also, this first stage reaction product may be conveniently obtained from a commercial source, as soon as the commercial digest has been obtained after proteolytic reaction only.

An essential feature of the present invention is the sequential reaction scheme involving first the use of protease and then the use of lipase. Indeed, this stagewise enzymatic treatment provides an enhancement not only in the efficiency and rate of the reaction, but also in the degree of enhancement in palatability of the product. Yet, it is an unexpected advantage of the resulting palatability enhancer that it may be very broadly used in foods as different as dry, semi-dry and wet foods intended for pets including at least cats and dogs.

Addition of fat in step b) is optional but is preferably performed for better results.

Proteases may be contained in the starting substrate comprising proteinaceous and fatty materials. Therefore, addition of proteases in step (i) is optional. Nevertheless, it is preferred to add at least one protease in step a) (i), for better results.

A second aspect of the present invention relates to a palatability enhancer for use in pet foods obtainable by the method as described above.

The palatability enhancer of the invention may be in the form of a liquid (e.g., a solution), or a solid (e.g., powder).

A third aspect of the present invention concerns an appetizing composition for use in pet foods comprising at least one palatability enhancer as previously described.

Alternatively, said appetizing composition comprises two or more palatability enhancers, at least one of which being a palatability enhancer according to the present invention.

A fourth aspect of the present invention is related to a method for preparing a pet food having increased palatability, comprising at least:

incorporating at least one palatability enhancer or at least one appetizing composition as disclosed above, in an amount effective to increase the palatability of said pet food.

Incorporation of the palatability enhancer may be performed by coating (e.g., spraying or dusting) or by adding to the pet food matrix.

A fifth aspect of the present invention concerns a pet food having increased palatability obtainable by the above method.

Also is encompassed by the present invention a palatable pet food comprising at least one palatability enhancer or at least one appetizing composition as previously described

Such a pet food may be selected from the group consisting of dry, semi-dry and wet pet foods.

A sixth aspect of the present invention is directed to a method for feeding pets comprising at least:

a) providing a pet food as described above;

b) feeding said pet food to pets.

Preferably, the pets are selected from the group consisting of cats and dogs.

The invention thus relates to a method for improving the palatability of pet foods, including lipolysis of starting materials, followed by a thermal reaction such as Maillard reaction. By starting materials, it is intended animal and/or marine and/or vegetarian digest, obtained after hydrolysis by endogenous enzymes present in the tissues or by added proteases. Commercially sources of starting materials include poultry, pork, beef, lamb, fish, and the like, and combinations thereof. One can use as starting materials raw tissues (viscera or viscera and liver for example, of poultry, pork, beef, lamb, fish based and the like, and combinations thereof), and perform a proteolysis before going on by lipolysis and thermal reaction.

Enzymes used in this invention are proteases and lipases. Commercial proteases and lipases are isolated from plants, animals, and microorganisms like bacteria, yeasts and fungi. In practice, it may appear that commercially-available proteases are not totally pure in the sense that they may exhibit a residual lipase activity. Reciprocally, commercially-available lipases may exhibit a residual proteolytic activity. It is of course in the normal capabilities of the person skilled in the art to choose the appropriate enzymes in order to avoid or minimise any possible undesirable side effect. This is the reason why in steps a)(i) and d), it is indicated that the proteolytic and lipolytic reactions are performed "in the absence of any added lipase" (step a)(i)) and "in the absence of any added protease" (step d)), respectively. This means that only the protease(s) in step a)(i) and the lipase(s) in step d) are present or added. Thus, if any residual lipase or protease activities are present in step a)(i) and d), respectively, they are not significant. Are only significant the enzymatic activities of interest that are the proteolytic activity in step a)(i) and the lipolytic activity in step d). Enzymes are typically used at a rate of about 0.01 to 10%, preferably 0.01 to 5%, more preferably 0.01 to 2%, based on the weight of the final palatability enhancer.

To obtain an optimal hydrolysis rate, the temperature and the pH will be adapted to the enzymes used. That will be readily apparent to those skilled in the art. The pH can be adjusted by any appropriate compound that is acceptable for use in pet food, such as phosphoric acid, caustic soda, other conventional and appropriate acidity or basicity regulators, and combinations thereof.

When the starting material are raw tissues, after proteolysis and before lipolysis, a heat-inactivating step of the enzymes (e.g., pasteurisation), followed by filtration, is performed at a temperature typically about 70 to 95°C, during a time sufficient, e.g., of about 5 to 20 minutes. This permits to inactivate proteases before performing the lipolysis.

To achieve the step of lipolysis, it is important to first emulsify the mixture before adding lipases. Emulsification can be realized by adding at least one emulsifier acceptable for use in pet foods. Appropriate emulsifiers are Sodium Stearoyl lactylate (SSL), Monoglycérides succinoylated, Gum Arabic, sodium alginate, Lecithin, and the like. Emulsifiers are typically added at a rate of about 0.01 to 10%, preferably 0.01 to 8%, and more preferably 0.01 to 5%, based on the weight of the final palatability enhancer.

As yet indicated above, any commercially available source of animal fat and/or vegetable oil can be tested. Appropriate sources of plant oils which are available in large quantities are canola oil, soybean oil, corn oil, olive oil, sunflower oil, linseed oil, palm oil, safflower oil, and the like, and by-products thereof. Appropriate sources of animal fats are tallow, lard, poultry fat, and the like and by-products thereof. Appropriate sources of marine oils are tuna oil, sardine oil, salmon oil, anchovy oil, fish oil and the like and by-products thereof. Also are encompassed herein the fats that are derived from animal, plant, marine sources, or that are produced by animals and plants. Typically, fat is present in an amount of about 2 to 30%, preferably 5 to 20%, based on the weight of the final palatability enhancer.

After lipolysis, a thermal reaction is performed in order to further develop flavour of the product. Conveniently, carbohydrate and nitrogen compound are added at a concentration of about 0.01 to 30%, preferably, 0.1 to 20%, more preferably 0.1 to 15% for the former, and from about 0.01 to 30%, preferably 0.01 to 20%, more preferably 0.01 to 15% for the latter. An appropriate temperature is chosen in the range of about 70 to 130°C, preferably 80 to 120°C, and the thermal treatment is performed during a time sufficient for further developing flavour of the product, e.g., during at least 30 minutes.

In order to ensure a long shelf life, preservatives may be added, such as natural antioxidants or synthetic ones (suitable antioxidants include, but are not limited to, BHA, BHT, propyl gallate, octyl gallate, tocopherols, rosemary extracts, and the like), sorbic acid or sorbic salts, and other acids like phosphoric acid and the like.

The palatability enhancer of the invention may be directly used as it is, typically at a rate of about 0.01 to 20%, preferably 0.01 to 10%, more preferably 0.01 to 5%, by weight to the pet food composition. Alternatively, it may be combined with other palatability enhancers, and all palatability enhancers may be applied concomitantly or sequentially.

In one embodiment of this invention, a dry formulation of the palatability enhancer is obtained by combining the palatability enhancer to carriers in appropriate proportions, and blending the components. The mixture is then dried by evaporation, and a dry palatability enhancer is formed.

The palatability enhancers of the present invention are useful in pet foods, such as dry pet foods, semi-moist pet foods, having a moisture content of about 50% or less by weight and representing a nutritionally balanced mixture containing proteins, fibre, carbohydrates and/or starch. Such mixtures are well known to those skilled in the art, and their composition depends on many factors such as, for example, the desired food balance for the specific type of pet. In addition to these base elements, the food may include vitamins, minerals and other additives such as seasonings, preservatives, emulsifiers and wetting agents. The food balance, including the relative proportions of vitamins, minerals, lipids, proteins and carbohydrates, is determined according to the known dietary standards in the veterinary field, for example by following recommendations of the National Research council (NRC), or the guidelines of the American Association of Feed Control Officials (AAFCO).

All conventional protein sources may be used, especially plant proteins such as soya or groundnut, animal proteins such as casein or albumin, and fresh animal tissue, for example fresh meat tissue and fresh fish tissue, or even elements that are dry or made dry such as fish meal, poultry meal, meat meal and bone meal. Other types of suitable proteinaceous materials include wheat gluten or corn gluten, and microbial proteins such as yeast. Ingredients containing a substantial proportion of starches or carbohydrates may also be used, for example corn, milo, alfalfa, wheat, barley, rice, soya husk and other grains having a low protein content.

Other ingredients may be added to the food, such as whey and milk by-products including carbohydrates. Furthermore, known seasonings, including for example corn syrup or molasses, may be added.

As an example, a typical formulation of a dry cat food composition to which the palatability enhancer of the present invention may be incorporated consists of (in percentages by weight): about 0-70% cereal base such as flour (corn, wheat, barley or rice); about 0-30% animal by-product (poultry or beef); about 0-25% corn gluten; about 0-25% fresh animal tissue, such as poultry or beef tissue; about 0 25% soya meal; about 0-10% animal fat; about 0-20% seafood base; about 0-25% fresh fish tissue; about 0-10% corn syrup having a high fructose content; about 0-10% dry molasses; about 0-1.5% phosphoric acid; and about 0-1.5% citric acid.

Vitamins and minerals may be added, including calcium carbonate, potassium chloride, sodium chloride, choline chloride, taurine, zinc oxide, ferrous sulphate, vitamin E, vitamin A, vitamin B12, vitamin D3, riboflavin, niacin, calcium pantothenate, biotin, thiamin mononitrate, copper sulphate, folic acid, pyroxidine hydrochloride, calcium iodate and the menadione sodium bisulphite complex (a source of vitamin K activity).

Dry pet foods are commonly prepared by different methods. One of these methods, that is widely used, is a cooker-extruder method. In the cooker-extruder method, dry ingredients are first blended together to form an admixture. This admixture is transferred into a steam conditioner where it is sufficiently moistened to become extrudable. The admixture then enters a cooker-extruder where it is cooked at an elevated temperature and pressure and then forced out of the apparatus through a die. This die forms the extruder product into a specific shape. Individual pieces of product are created by periodically slicing off the end of the extruded stream of product. The individual pieces, or kibbles, are then dried in a hot air dryer. Generally, the product is dried until it contains less than 15% moisture, and preferably about 5 to 10% moisture. The dried particles or pieces are then transferred by bulk conveyor to a coating drum and sprayed with fat. Other liquids, such as, for example, phosphoric acid may alternatively be applied to the pieces, or applied in addition to the fat. The resulting pellets or kibbles constitute the basal composition to which a coating of the palatability enhancer can be applied.

In one embodiment of this invention, the palatability enhancers of the present invention may be applied by coating. Coating, as used herein, refers to the topical deposition of the palatability enhancer or flavour composition onto the surface basal composition, such as by spraying, dusting, or the like. For example, kibbles of uncoated, extruded basal pet food can be placed in a container such a tub or a coating drum for mixing. A fat, such as pork fat or poultry fat, is heated and then sprayed onto the pet food in a manner to obtain a coating of the kibbles. The coating need not to a continuous layer, but preferably is uniform. After the fat, a palatability enhancer may be applied as either a liquid or a dry powder, while the product is mixing. A liquid palatability enhancer is typically sprayed on while a dry palatability enhancer is typically dusted on. Alternatively, palatability enhancers could be mixed with the fat and applied concurrently. In another alternative method of coating, palatability enhancers are coated before deposition of fat.

In another embodiment of this invention, the palatability enhancer is contacted with the raw materials of the pet food composition prior to cooking. In this case, the palatability enhancer is combined to proteins, fibre, carbohydrates and/or starch of the basal composition and is cooked with those materials in the cooker-extruder.

The palatability enhancers of the present invention are also useful in wet pet foods, having a moisture content of more than 50% and representing a nutritionally balanced mixture. The wet foodstuff may comprise one or more ingredients selected from farinaceous materials (such as grain-based materials and flours), animal by-products, fresh animal tissues, fresh fish tissues, animal and vegetable fats, seafood based materials, vitamins, minerals, preservatives, emulsifiers, surfactants, texturizing agents, colouring agents, and the like. Such ingredients are well-known by the skilled artisan and will be chosen appropriately depending on wet pet food.

Most companion animal foods that are gravy-based are prepared by grinding meat, meat mimetics or meat by-products, and then forming the ground mixture via low pressure extrusion through a steaming tunnel where it is cooked.

Starch and binders are then added, after which the mixture is cut into pieces, mixed with water, starch and binders. The mixture is then sealed in cans and cooked in a hydrostat, continuous or rotary steritort. Moist pet foods that are not gravy based are prepared by macerating meat, meat mimetics or meat by products and re-forming the macerated materials with starch, water and binders. The mixture is then sealed in cans and cooked in a hydrostat, continuous or rotary steritort.

The liquid or dry palatability enhancer may be applied in a gravy or jelly type matrix during the blending process in addition to the rest of ingredients (texturizing agents, stabilisers, colorants, and nutritional additives). The liquid or dry palatability enhancer may also be applied into a meat-by mixtures for chunks or loaf preparation. In this case it can be added to raw material before or after the grinding process. The meat by mixture may be cooked in a steam or grilling oven in the case of chunks manufacturing, or directly sealed in cans in the case of loaf manufacturing.

The above described palatability enhancers provide significant advantages over the prior art. The effects of the present invention can be measured by a test that is commonly called "two-bowl test" or "versus test". Of course, the person skilled in the art is free to use any other appropriate test than the two bowl test herein described to determine preference. Such alternative tests are well known in the art.

Principle of the two-bowl test:

The test is based on the postulate whereby the more food consumed, the more palatable it is.
Individual versus (Two bowls) appetence tests, based on the comparison between two foods, were carried out. Tests are performed either on panel of 36 dogs or on panel of 40 cats, depending on the test's objectives.

Operating method of the test:

- Identical amounts of food A and food B were weighed out and placed in identical bowls. The amount present in each ration enables the daily requirements to be met.
- Distribution of the bowls:

  Dog test: the bowls were placed in an individual feed trough accessible to dogs.
  Cat test: The bowls were presented at the same time to each cat in an individual loose box and their positions were switched at each meal to avoid a choice lead by handedness.

- Duration of the test:

  Dog test: 15 minutes maximum (if one of the two bowls was entirely eaten before 15 minutes, the two bowls were removed, and the test was stopped)
  Cat test: 15 minutes minimum (if one of the two bowls was entirely eaten before 30 minutes, the two bowls were removed, and the test was stopped)

Parameters studied

- Measured parameters: First food consumed and amount of each food consumed by the end of the test
- Calculated parameters: individual consumption ratio in % (CR)

$$CR_A = \text{consumption of A(g)} \times 100/\text{consumption of A+B (g)}$$

$$CR_B = \text{consumption of B(g)} \times 100/\text{consumption of A+B (g);}$$

⇒ Average consumption ratio (ACR) = average of each individual ratios (an equal importance is given to each animal, regardless of its size and of its corresponding consumption)
If animals have higher or lower consumption compared to determined values, they are not taken into account into statistical treatment

Statistical analysis

Statistical analysis was used to determine if there was a significant difference between the 2 ratios: ACR ⇒ Student's t-test with 3 error thresholds, namely 5%, 1% and 0.1%.
A Chi test was used to determine if there was a significant difference between the number of dogs or cats with Food A as first food eaten and the number of dogs or cats with Food B as first food eaten. Significance levels are noted as below:

| NS | not significant | (p > 0.05) |
|----|-----------------|------------|
| * | significant | (p < 0.05) |
| ** | highly significant | (p < 0.01) |
| *** | very highly significant | (p < 0.001) |

The invention will be further described by reference to the following examples, which are presented for the purpose of illustration only and are intended to limit the scope of the invention.

## EXAMPLES

In the following examples, various types of fats or fat mixtures as defined above are tested. These fats are referred to hereunder as fat 1, fat 2, fat 3. It is shown below that, whichever fat or fat mixture is used, the palatability of the product of the invention is of great value.

### Example 1: XLHM product with starting raw material

Formulation

**TABLE 1**

| Components | % |
|-----------|-----|
| Starting raw material | 78.43 |
| Fat | 7.18 |
| Caustic soda | 3.10 |
| Reducing Sugars | 1.79 |
| Nitrogen compounds | 2.24 |
| Protease enzyme | 0.50 |
| Lipase enzyme | 0.05 |
| Emulsifiers | 0.60 |
| Phosphoric acid | 5.73 |
| Potassium sorbate | 0.36 |
| Preservatives and antioxidants | 0.02 |

Method:

- Raw materials, exogenous and/or endogenous proteases, preservatives and antioxidants are mixed together, and heated at a temperature of about 60 to 70°C during at least 30 minutes (step a)(i)).
- The mixture is heated and maintained at about 85°C for at least 10 minutes to be pasteurized, then it is cooled at about 25 to 45°C, preferably with an associated filtration, so as to obtain the first stage reaction product (step a)(ii)).
- Optionally, it is possible to add here a storing step, under appropriate conditions for a given period, with a prior acidification process.

- Then, the pH is adjusted at about 7 to 10 by using caustic soda, or a basicity regulator, and emulsifiers, fat and lipase enzymes are added for lipolysis, during at least 120 minutes and preferably about 120 to 420 minutes, so as to obtain the second stage reaction product (steps b) to d) performed simultaneously).
- Reducing sugars and nitrogen compounds are incorporated, and the resulting mixture is heated at about 90 to 110°C during at least 30 minutes, resulting in the production of a palatability enhancer (step e).
- Finally, the product is cooled and phosphoric acid, potassium sorbate, preservatives and antioxidants are added for long shelf-life, the final pH being 2.9, so as to obtain a ready-to-use product palatability enhancer (called XLHM).

Dog Palatability assessment:

SP1 and SP2 are super premium liquids of the existing range, with a different palatability level, SP2 being more palatable than SP1.

XLHM products are palatability enhancers of the present invention:

XLMH version A: poultry raw material based
XLHM version B: poultry raw material based and fat 1 used
XLHM version C: poultry raw material based and fat 2 used
XLHM version D: poultry raw material based and fat 3 used

Dog palatability results of SP1 vs SP2

[0056] -

**TABLE 2**

| Consumption ratio are presented as percentages of food A and food B eaten, and also as ratio in italics | | | | | | | | |
|---|---|---|---|---|---|---|---|---|
| **Reference and pal tests dates** | **Food A** | **Food B** | **T** | **First choice** | **Consumption ratio** | | **Significance** | **Validated animals** |
| | | | | | **% A** | **%B** | | |
| 25/10/2004 10012434 | 2.5% SP1 | 2.5% SP2 | T0 | B * | 21 *1.0* | 79 *3.8* | *** | 29 |

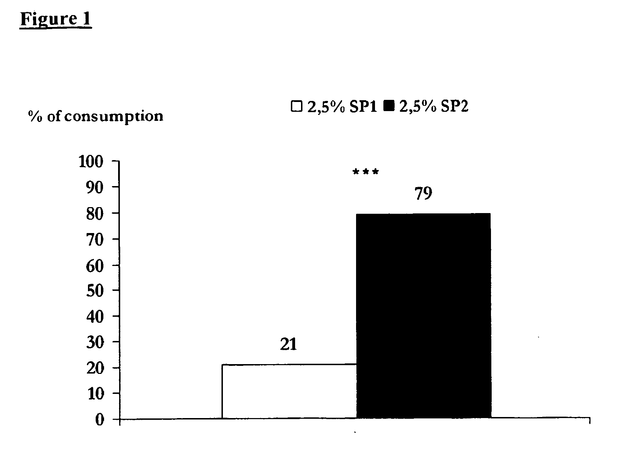

Consumption of the food is significantly different between SP2 and SP1, demonstrating the higher performance of this Super Premium palatability enhancer SP2. Test result is presented on a plot in Figure 1.

Dog palatability results of XLHM vs SP1 and SP2

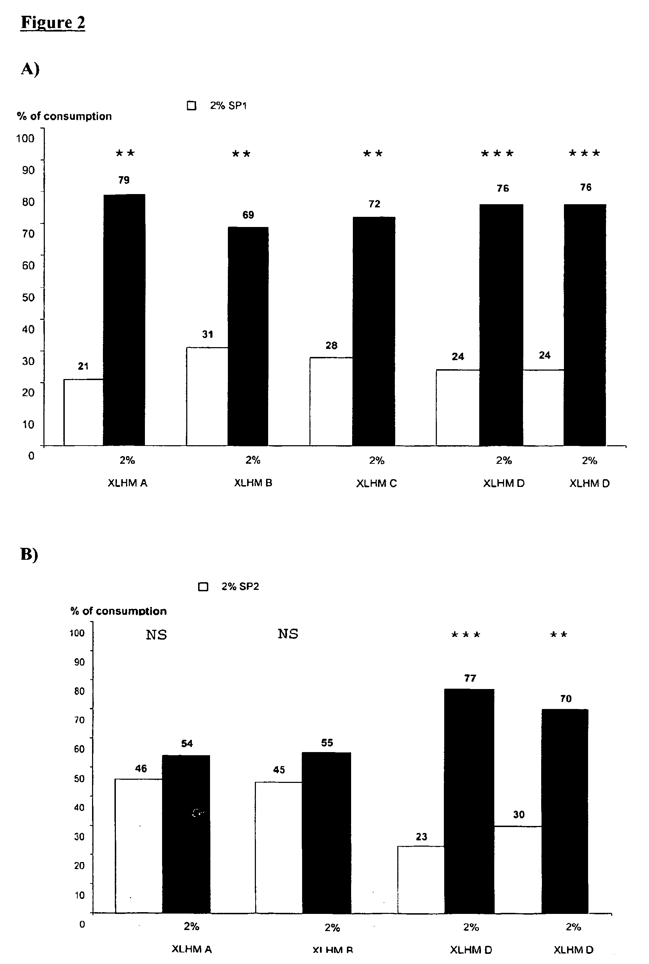

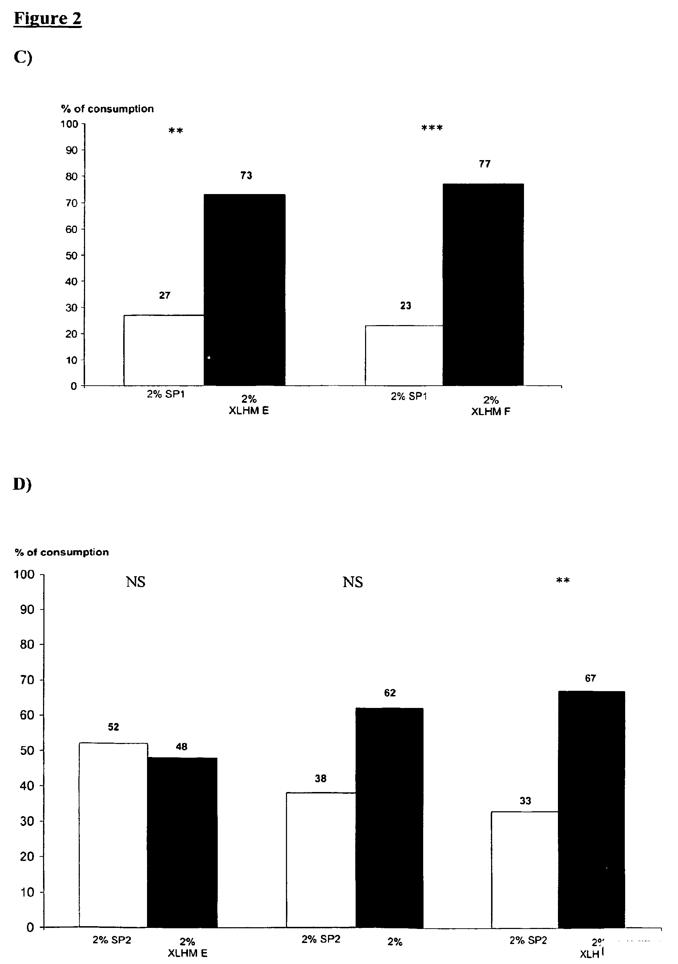

All test results are presented on a plot in Figure 2

**TABLE 3**

| **Reference and pal tests dates** | **Food A** | **Food B** | **T** | **First choice** | **Consumption ratio** | | **Significance** | **Validated animals** |
|---|---|---|---|---|---|---|---|---|
| | | | | | **% A** | **%B** | | |
| 20/04/2006 10022889 | 2% SP1 | 2% XLHM A | T0 | B ** | 21 *1.0* | 79 *3.8* | *** | 32 |
| 21/04/2006 10022937 | 2% SP1 | 2% XLHM B | T0 | B ** | 31 *1.0* | 69 *2.2* | ** | 28 |
| 01/09/2006 10026356 | 2% SP1 | 2% XLHM C | T0 | B* | 28 *1.0* | 72 *2.6* | ** | 28 |
| 26/04/2006 10023108 | 2% SP1 | 2% XLHM D | T0 | B *** | 24 *1.0* | 76 *3.2* | *** | 34 |

(continued)

| Reference and pal tests dates | Food A | Food B | T | First choice | Consumption ratio | | Significance | Validated animals |
|---|---|---|---|---|---|---|---|---|
| | | | | | % A | %B | | |
| 21/08/2006 10026045 | 2% SP1 | 2% XLHM D | T0 | B *** | 24 *1.0* | 76 *3.2* | *** | 29 |
| 23/04/2006 10022958 | 2% SP2 | 2% XLHM A | T0 | A NS | 46 *1.0* | 54 *1.2* | NS | 29 |
| 24/04/2006 10022997 | 2% SP2 | 2% XLHM B | T0 | B NS | 45 *1.0* | 55 *1.2* | NS | 30 |
| 28/04/2006 10023112 | 2% SP2 | 2% XLHM D | T0 | B ** | 23 *1.0* | 77 *3.3* | *** | 31 |
| 21/08/2006 10026079 | 2% SP2 | 2% XLHM D | T0 | B ** | 30 *1.0* | 70 *2.3* | ** | 30 |

All the four versions of XLMH show an increase of palatability compared with the product SP1. Whatever the fat used, the palatability of XLHM is equal or higher than the one of SP2.

### Example 2: XLHM product with starting digest

Formulation:

**TABLE 4**

| Components | % |
|---|---|
| Starting digest | 59.49 |
| Water | 11.18 |
| Fat | 6.71 |
| Caustic soda | 12.13 |
| Reducing Sugars | 1.39 |
| Nitrogen compounds | 1.74 |
| Lipase enzyme | 0.05 |
| Emulsifiers | 0.64 |
| Salts | 0.24 |
| Phosphoric acid | 6.18 |
| Potassium sorbate | 0.23 |
| Preservatives and antioxidants | 0.02 |

Method:

- The starting product used in this example is a digest as obtained after step a) (i) and (ii) illustrated in Example 1, that is to say the first reaction product.

- The method begins with steps b), c) and d), where the pH is adjusted at about 7 to 10 by using caustic soda, or a basicity regulator, and emulsifiers, fat and lipase enzymes are added for lipolysis during at least 120 minutes and preferably about 120 to 420 minutes, as so to obtain the second stage reaction product.
- Reducing sugars and nitrogen compounds are then incorporated, and the resulting mixture is heated at about 90 to 110°C during at least 30 minutes, so as to obtain a palatability enhancer (step e).
- Finally, the product is cooled and phosphoric acid, potassium sorbate, preservatives and antioxidants are added for long shelf-life, the final pH being 2.9, so as to obtain a ready-to-use product palatability enhancer (called XLHM version ...).

Dog Palatability assessment:

SP1 and SP2 are super premium liquids of the existing range, with a different palatability level, SP2 being more palatable than SP1.

XLHM products are palatability enhancers of the present invention:

XLHM version E: liquid digest at the beginning and fat 1 used
XLHM version F: liquid digest at the beginning and fat 2 used
XLHM version G: liquid digest at the beginning and fat 3 used

**TABLE 5**

| Reference and pal tests dates | Food A | Food B | T | First choice | Consumption ratio | | Significance | Validated animals |
|---|---|---|---|---|---|---|---|---|
| | | | | | % A | %B | | |
| 14/10/2006 10027288 | 2% SP1 | 2% XLHM E | T0 | B * | 27 *1.0* | 73 *2.7* | ** | 29 |
| 17/12/2006 10028701 | 2% SP1 | 2% XLHM F | T0 | B *** | 23 *1.0* | 77 *3.3* | *** | 34 |
| 16/10/2006 10027339 | 2% SP2 | 2% XLHM E | T0 | NS | 52 *1.1* | 48 *1.0* | NS | 31 |
| 19/12/2006 10028741 | 2% SP2 | 2% XLHM F | T0 | B NS | 38 *1.0* | 62 *1.6* | NS | 31 |
| 12/04/2007 10031077 | 2% SP2 | 2% XLHM G | T0 | B * | 33 *1.0* | 67 *2.0* | ** | 32 |

All test results are presented on a plot in Figure 2.
Using a starting digest at the beginning of the process keeps the same performance as previously. That is to say: higher palatability than SP1 and at least equal than SP2, and often better than SP2.

## Comparative Example 3: XLHM product (D') with starting raw material and without dedicated proteolysis step

Formulation:

**TABLE 6**

| Components | % |
|---|---|
| Starting raw material with endogenous proteases | 67.13 |

(continued)

| Components | % |
|---|---|
| Water | 12.74 |
| Fat 3 | 8.42 |
| Caustic soda | 2.15 |
| Reducing Sugars | 1.59 |
| Nitrogen compounds | 1.98 |
| Lipase enzyme | 0.08 |
| Emulsifiers | 0.60 |
| Salts | 0.47 |
| Phosphoric acid | 4.25 |
| Potassium sorbate | 0.55 |
| Preservatives and antioxidants | 0.04 |

Method:

- Here, the method begins with a step of concomitant action of proteases and lipases.
- First, raw materials containing proteases, water, preservatives and antioxidants are mixed together, the pH is adjusted at about 7 to 10 by using caustic soda, and emulsifiers, salts, fat3 and lipase enzymes are added for an hydrolysis step, at a temperature of about 25 to 45°C, during at least 120 minutes and preferably about 120 to 420 minutes, so as to obtain product 1.
- Then, reducing sugars and nitrogen compounds are incorporated, and the resulting mixture is heated at about 90 to 110°C during at least 30 minutes, so as to obtain product 2.
- Finally, product 2 is cooled and phosphoric acid, potassium sorbate, preservatives and antioxidants are added for long shelf-life, the final pH being 2.9, so as to obtain a ready-to-use product (product XLHM D').

Dog Palatability assessment:

TABLE 7

| Reference and pal tests dates | Food A | Food B | T | First choice | Consumption ratio | | Significance | Validated animals |
|---|---|---|---|---|---|---|---|---|
| | | | | | % A | %B | | |
| 28/06/2006 10024708 | 2% SP1 | 2% XLHM D' | T0 | B ** | 18 *1.0* | 82 *4.5* | *** | 32 |
| 29/06/2006 10024730 | 2% SP2 | 2% XLHM D' | T0 | B NS | 43 *1.0* | 57 *1.3* | NS | 34 |

Compared to the results obtained with product XLHM version D (see Example 1), XLHM version D' is less good versus SP2, but keeps a high palatability versus SP1. In other words, results obtained by combining proteolysis and lipolysis are not as good as those obtained when proteolysis and lipolysis are separated.

EP 2 276 353 B1

**Comparative Example 4: XLHM product (B') with starting raw material and with inverted enzymatic steps**.

Formulation:

**TABLE 8**

| Components | % |
|---|---|
| Starting raw material | 59.43 |
| Water | 11.06 |
| Fat 1 | 6.61 |
| Caustic soda | 12.86 |
| Reducing Sugars | 1.38 |
| Nitrogen compounds | 0.57 |
| Lipase enzyme | 0.05 |
| Protease | 0.23 |
| Emulsifiers | 0.47 |
| Salts | 0.4 |
| Phosphoric acid | 6.64 |
| Potassium sorbate | 0.28 |
| Preservatives and antioxidants | 0.02 |

Method:

- In this example, the method begins with a step of lipolysis followed by a step of proteolysis.
- First, raw materials, water, preservatives and antioxidants are mixed together, the pH is adjusted at about 7 to 10 by using caustic soda, and emulsifiers, salts, fat1 and lipase enzymes are added for a lipolysis step, during at least 120 minutes and preferably about 120 to 420 minutes, at a temperature of about 25 to 45°C, so as to obtain product 1.
- Then, protease enzymes, reducing sugars and nitrogen compounds are incorporated, and heated at a temperature of about 60 to 70°C during at least 30 minutes, so as to obtain product 2.
- The resulting mixture is heated at about 90 to 110°C during at least 30 minutes, so as to obtain product 3.
- Finally, product 3 is cooled and phosphoric acid, potassium sorbate, preservatives and antioxidants are added for long shelf-life, the final pH being 2.9, so as to obtain a ready-to-use product (product XLHM B').

Dog Palatability assessment:

**TABLE 9**

| Reference and pal tests dates | Food A | Food B | T | First choice | Consumption ratio | | Significance | Validated animals |
|---|---|---|---|---|---|---|---|---|
| | | | | | % A | %B | | |
| 25/02/2006 10021552 | 2% SP1 | 2% XLHM B' | T0 | A NS | 53 *1.12* | 47 *1.00* | A NS | 29 |

Compared to the results observed with product XLHM version B (see example 1), XLHM version B' is less good versus SP1.

As a conclusion, better results are obtained when proteolysis is performed before lipolysis, instead of lipolysis before proteolysis.

**Example n°5 : Addition of XLHM product version G in a loaf for cat**

Formulation of product B

TABLE 10

| Components | kgs |
|---|---|
| Frozen pork lungs and liver | 2.376 |
| Frozen chicken lungs and liver | 5.232 |
| Frozen chicken carcass | 3.912 |
| Texturizing agents | 0.235 |
| Mix of vitamins & minerals | 0.072 |
| Wheat flour | 1.200 |
| XLHM version G | 0.720 |
| Water | 10.253 |

Formulation of product C

TABLE 11

| Components | kgs |
|---|---|
| Frozen pork lungs and liver | 2.811 |
| Frozen chicken lungs and liver | 5.271 |
| Frozen chicken carcass | 3.932 |
| Texturizing agents | 0.235 |
| Mix of vitamins & minerals | 0.072 |
| Wheat flour | 1.200 |
| C'sens W9P powder | 0.240 |
| Water | 10.238 |

Definition: C'sens W9P is a commercially available SPF Super Premium palatability enhancer intended for wet pet food applications

Method

Raw materials (pork lungs, pork livers, chicken lung and liver, chicken carcass) were allowed to thaw overnight at room temperature. Then they were ground in a vertical cutter (Stephan, Germany) for 5 min at 1500 tr/min. Water was poured into a bucket. The powders (Texturizing agents, Mix of vitamins & minerals, and wheat flour) and the XLHM version G or C'sens W9P were solubilized in the water thanks to a blender (Dynamic, France). The solution was added to the ground meats and mixed for another 5 min under vacuum (-1bar) in the cutter. The slurry was transferred to a vacuum filler (Handtmann, Germany) and dosed into 400g iron cans. The cans were seamed and retorted in a Microflow retort (Barriquand, France), using the following process : heating to 127°C in 13 min, temperature maintained at 127°C for 55 min, cooling to 20°C in 15 min.

Cat palatability assessment

**TABLE 12**

| Reference and pal tests dates | Food A | Food B | T | First choice | Consumption ratio | | Significance | Validated animals |
|---|---|---|---|---|---|---|---|---|
| | | | | | % A | %B | | |
| 21/07/2007 10033195 | 2% PRODUCT B | 2% PRODUCT C | T0 | A* | 66 *1.0* | 34 *1.9* | *** | 36 |
| 22/07/2007 10033195 | 2% PRODUCT B | 2% PRODUCT C | T0 | A* | 67 *2.0* | 33 *1.0* | *** | 37 |

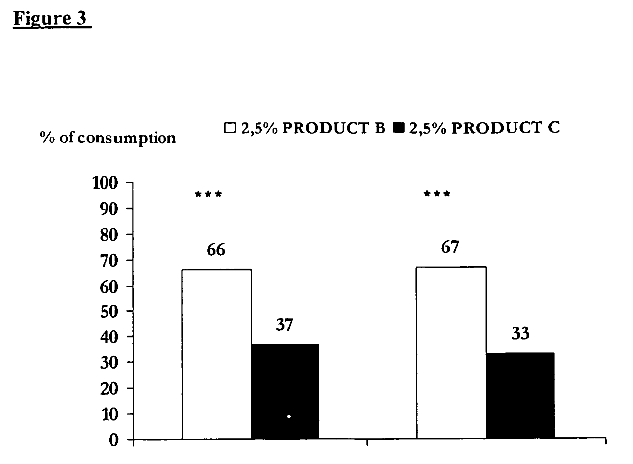

The results show that product B (containing the XLHM version G) has an higher palatability than to product C. Test result is presented on a plot in Figure 3.

**Claims**

1.  A method for preparing a palatability enhancer for use in pet foods, comprising at least:

    a) providing a first stage reaction product obtained by:

    (i) reacting with at least one exogenous and/or endogenous protease, in the absence of any exogenous or added lipase, a substrate comprising proteinaceous and fatty materials, in amounts, under conditions of pH and temperature, and for a time, effective to cause proteolytic reaction,
    (ii) heat-inactivating said protease and filtrating the resulting digest product,

    b) optionally adding fat;
    c) emulsifying said first stage reaction product;
    d) reacting said emulsion with at least one lipase, in the absence of any added protease, in amounts, under conditions of pH and temperature, and for a time, effective to cause lipolytic reaction, so as to obtain a second stage reaction product;
    e) adding at least one reducing sugar and at least one nitrogen compound to said second stage reaction product and heating the resulting mixture to a temperature and for a time effective to further develop the palatability of the mixture, resulting in the production of a palatability enhancer.

2.  The method according to claim 1, further comprising a step a)(iii) of cooling down the product resulting from step a)(ii) to a temperature effective to cause the subsequent lipolytic reaction of step d).

3.  The method according to claim 1 or 2, further comprising a step of cooling down the mixture obtained in step e).

4.  The method according to any one of claims 1 to 3, wherein the first stage reaction product is prepared and stored under appropriate conditions before subsequent use.

5.  A palatability enhancer for use in pet foods obtainable by the method according to any one of claims 1 to 4.

6.  The palatability enhancer according to claim 5, wherein said palatability enhancer is a liquid or a powder.

7.  An appetizing composition for use in pet foods comprising at least one palatability enhancer according to claim 5 or 6.

8.  A method for preparing a pet food having increased palatability, comprising at least:

    incorporating at least one palatability enhancer according to claim 5 or 6, or at least one appetizing composition according to claim 7 to a pet food, in an amount effective to increase the palatability of said pet food.

9.  The method according to claim 8, wherein said incorporation is performed by coating or by adding to the pet food matrix.

10.  A pet food having increased palatability obtainable by a method according to claim 8 or 9.

11.  A palatable pet food comprising at least one palatability enhancer according to claim 5 or 6, or at least one appetizing composition according to claim 7.

12.  The pet food according to claim 10 or 11, wherein said pet food is selected from the group consisting of dry, semi-dry and wet pet foods.

13.  A method for feeding pets comprising at least:

    a) providing a pet food according to any one of claims 10 to 12;
    b) feeding said pet food to pets.

**14.** The method according to claim 13, wherein said pets are selected from the group consisting of cats and dogs.

**Patentansprüche**

**1.** Verfahren zur Herstellung eines Schmackhaftigkeitsverstärkers zur Verwendung in Tierfutter, umfassend zumindest:

a) Bereitstellen eines Reaktionsprodukts einer ersten Stufe, erhalten durch:

(i) Reagieren eines Substrats umfassend proteinöse und fettige Materialien mit mindestens einer exogenen und/oder endogenen Protease in Abwesenheit von exogenen oder hinzugefügten Lipasen, in Mengen, unter pH- und Temperaturbedingungen und für eine Zeit, die effektiv sind um eine proteolytische Reaktion zu bewirken,
(ii) Hitzeinaktivieren der Protease und Filtrieren des resultierenden Abbauprodukts,

b) optional Hinzufügen von Fett;
c) Emulsifizieren des Reaktionsprodukts der ersten Stufe;
d) Reagieren der Emulsion mit mindestens einer Lipase in Abwesenheit von hinzugefügten Proteasen, in Mengen, unter pH- und Temperaturbedingungen und für eine Zeit, die effektiv sind um eine lipolytische Reaktion zu bewirken, um so ein Reaktionsprodukt einer zweiten Stufe zu erhalten;
e) Hinzufügen mindestens eines reduzierenden Zuckers und mindestens einer Stickstoffverbindung zu dem Reaktionsprodukt der zweiten Stufe und Erhitzen der resultierenden Mischung auf eine Temperatur und für eine Zeit, die effektiv sind um die Schmackhaftigkeit der Mischung weiter auszuprägen, resultierend in der Herstellung eines Schmackhaftigkeitsverstärkers.

**2.** Verfahren nach Anspruch 1, ferner umfassend einen Schritt a) (iii) des Herunterkühlens des aus Schritt a) (ii) resultierenden Produkts auf eine Temperatur, die effektiv ist um die nachfolgende lipolytische Reaktion von Schritt d) zu bewirken.

**3.** Verfahren nach Anspruch 1 oder 2, ferner umfassend einen Schritt des Herunterkühlens der in Schritt e) erhaltenen Mischung.

**4.** Verfahren nach einem der Ansprüche 1 bis 3, wobei das Reaktionsprodukt der ersten Stufe hergestellt und vor der nachfolgenden Verwendung unter geeigneten Bedingungen gelagert wird.

**5.** Schmackhaftigkeitsverstärker zur Verwendung in Tierfutter, erhältlich gemäß dem Verfahren nach einem der Ansprüche 1 bis 4.

**6.** Schmackhaftigkeitsverstärker nach Anspruch 5, wobei der Schmackhaftigkeitsverstärker eine Flüssigkeit oder ein Pulver ist.

**7.** Appetitanregende Zusammensetzung zur Verwendung in Tierfutter, umfassend mindestens einen Schmackhaftigkeitsverstärker nach Anspruch 5 oder 6.

**8.** Verfahren zur Herstellung eines Tierfutters mit einer erhöhten Schmackhaftigkeit, umfassend zumindest:

Einbringen mindestens eines Schmackhaftigkeitsverstärkers nach Anspruch 5 oder 6 oder mindestens einer appetitanregenden Zusammensetzung nach Anspruch 7 in ein Tierfutter in einer Menge, die effektiv ist um die Schmackhaftigkeit des Tierfutters zu erhöhen.

**9.** Verfahren nach Anspruch 8, wobei das Einbringen durchgeführt wird mittels Beschichten oder mittels Hinzufügen zu der Matrix des Tierfutters.

**10.** Tierfutter mit erhöhter Schmackhaftigkeit, erhältlich gemäß dem Verfahren nach Anspruch 8 oder 9.

**11.** Schmackhaftes Tierfutter, umfassend mindestens einen Schmackhaftigkeitsverstärker nach Anspruch 5 oder 6 oder mindestens eine appetitanregende Zusammensetzung nach Anspruch 7.

12. Tierfutter nach Anspruch 10 oder 11, wobei das Tierfutter ausgewählt ist aus der Gruppe bestehend aus trockenen, halbtrockenen und feuchten Tierfuttern.

13. Verfahren zur Fütterung von Heimtieren, umfassend zumindest:

   a) Bereitstellen eines Tierfutters nach einem der Ansprüche 10 bis 12;
   b) Verfüttern des Tierfutters an Heimtiere.

14. Verfahren nach Anspruch 13, wobei die Heimtiere ausgewählt sind aus der Gruppe bestehend aus Katzen und Hunden.

**Revendications**

1. Méthode de préparation d'un agent permettant d'améliorer l'appêtence d'aliments pour animaux de compagnie, comprenant au moins :

   a) la fourniture d'un produit réactionnel de premier stade obtenu par :

      (i) la réaction avec au moins une protéase exogène et/ou endogène, en l'absence de lipase exogène ou ajoutée, d'un substrat comprenant des matériaux protéiques et des graisses, en quantités, dans des conditions de pH et de température et pendant une durée efficaces pour entraîner une réaction protéolytique,
      (ii) l'inactivation thermique de ladite protéase et la filtration du produit de digestion obtenu,

   b) éventuellement, l'addition de graisses ;
   c) l'émulsion dudit produit réactionnel de premier stade ;
   d) la réaction de ladite émulsion avec au moins une lipase, en l'absence de protéase ajoutée, en quantités, dans des conditions de pH et de température et pendant une durée efficaces pour entraîner une réaction lipolytique de façon à obtenir un produit réactionnel de deuxième stade ;
   e) l'addition d'au moins un sucre réducteur et d'au moins un composé azoté audit produit réactionnel de deuxième stade et le chauffage du mélange obtenu à une température et pendant une durée efficaces pour développer encore l'appêtence du mélange, entraînant la production d'un agent d'amélioration de l'appêtence.

2. Méthode selon la revendication 1, comprenant en outre une étape a) (iii) de refroidissement du produit résultant de l'étape a) (ii) à une température efficace pour entraîner la réaction lipolythique consécutive de l'étape d).

3. Méthode selon la revendication 1 ou 2, comprenant une étape de refroidissement du mélange obtenu à l'étape e).

4. Méthode selon l'une quelconque des revendications 1 à 3, dans laquelle le produit réactionnel de premier stade est préparé et stocké dans des conditions appropriées avant utilisation consécutive.

5. Agent d'amélioration de l'appêtence à utiliser dans des aliments pour animaux de compagnie, pouvant être obtenu par la méthode selon l'une quelconque des revendications 1 à 4.

6. Agent d'amélioration de l'appêtence selon la revendication 5, ledit agent d'amélioration de l'appêtence étant un liquide ou une poudre.

7. Composition appêtente à utiliser dans les aliments pour animaux domestiques, comprenant au moins un agent d'amélioration de l'appêtence selon la revendication 5 ou 6.

8. Méthode de préparation d'un aliment pour animaux de compagnie ayant une appêtence accrue, comprenant au moins :

   l'incorporation d'au moins un agent d'amélioration de l'appêtence selon la revendication 5 ou 6, ou au moins une composition appêtente selon la revendication 7 dans un aliment pour animaux de compagnie, en une quantité efficace pour augmenter l'appêtence dudit aliment pour animaux de compagnie.

9. Méthode selon la revendication 8, dans laquelle ladite incorporation est réalisée par enrobage ou par addition à la matrice d'aliment pour animaux de compagnie.

10. Aliment pour animaux de compagnie, ayant une appêtence accrue, pouvant être obtenu par une méthode selon la revendication 8 ou 9.

11. Aliment appêtent pour animaux de compagnie comprenant au moins un agent d'amélioration de l'appêtence selon la revendication 5 ou 6, ou au moins une composition appêtente selon la revendication 7.

12. Aliment pour animaux de compagnie selon la revendication 10 ou 11, ledit aliment pour animaux de compagnie étant choisi dans le groupe constitué par les aliments secs, semi-secs et humides pour animaux de compagnie.

13. Méthode pour l'alimentation d'animaux de compagnie, comprenant au moins :

   a) la fourniture d'un aliment pour animaux de compagnie selon l'une quelconque des revendications 10 à 12 ;
   b) l'alimentation des animaux de compagnie avec ledit aliment pour animaux de compagnie.

14. Méthode selon la revendication 13, dans laquelle lesdits animaux de compagnie sont choisis dans le groupe constitué par les chats et les chiens.

## Figure 1

% of consumption  □ 2,5% SP1 ■ 2,5% SP2

## Figure 2

**A)**

**B)**

## Figure 2

**C)**

**D)**

## Figure 3

% of consumption     □ 2,5% PRODUCT B ■ 2,5% PRODUCT C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3857968 A
- US 3968255 A
- US 4713250 A
- US 4089978 A